# EUROPEAN PATENT SPECIFICATION

(11) **EP 2 698 310 B1**
(45) Date of publication and mention of the grant of the patent: **16.05.2018**
(21) Application number: 13380032.6
(22) Date of filing: 12.08.2013
(51) Int. Cl.: B62K 25/28, B62K 25/04

(54) **Bicycle frame with deformable rear suspension**
Fahrradrahmen mit verformbarer Hinterradaufhängung
Cadre de bicyclette à suspension arrière déformable

(30) Priority: 14.08.2012 ES 201200822
(43) Date of publication of application: 19.02.2014
(73) Proprietor: ORBEA, S. COOP., 48269 Mallabia (BIZKAIA) (ES)
(72) Inventor: Auzmendi Arkarazo, Beñat, 48269 Mallabia (Bizkaia) (ES)
(74) Representative: Urteaga Simarro, José Antonio

(56) References cited:
- US-A1- 2004 061 305
- US-A1- 2009 072 512

## Description

### Technical field

The invention relates to a frame for a bicycle provided with a rear suspension system with deformable members.

### Prior art

Bicycles are known in prior art whose frames present a rear suspension system that allows the position of the rear wheel to be adjusted in relation to the saddle in the event that the ground is uneven, and allows absorbing vibrations, thereby enhancing the comfort of the cyclist.

These conventional rear suspension systems are usually formed by a series of members that define an articulated quadrilateral having at least four points of rotation. Said points of rotation are constructively-complex articulated areas that include bearings, threaded elements and other members that add to the weight of the frame, thus having a negative impact on the performance of the cyclist, as greater effort is required to move the bicycle forward. For instance, U.S. patent application no. US20090072512A1 describes a bicycle frame comprising a rear suspension system that includes five points of rotation, one of them being part of the rear triangle and allowing a rigid strut of the rear triangle to be articulately connected to a rigid base of the rear triangle.

A known manner for reducing the weight of the frame, while still guaranteeing that the suspension mechanism works, is to replace one of the points of rotation by providing some of the parts of the frame with the ability to deform vertically. In exchange, however the design of components allowing deformation then becomes a critical issue: it is not easy to provide a design that guarantees effective lateral stiffness, suitable stability, and an efficient use of the energy of the cyclist, while simultaneously providing vertical deformability.

An example of a frame comprising a rear suspension system having deformable or bending components is described in patent ES2265723, awarded to the applicant of the present invention. In this solution, there is no pivot point between the base of the rear triangle and the area of the frame where the bottom bracket. Instead, two deformable plates are provided at the base, bending taking place specifically at said plates.

Another example of a deformable frame may be seen in patent application no. WO0187697, which describes a bending structure in which two points of rotation are removed and the base of the rear triangle acts as the member supporting most of the deformation.

In the two preceding solutions, the bases withstand excessive deformation because an excessive amount of force must be applied for the suspension to carry out its stroke. This has a negative impact on the maintenance of optimal lateral stiffness.

Another example of a deformable frame is disclosed in U.S patent application no. US20040061305A1, which describes a bicycle frame comprising a rear suspension system according to the preamble of claim 1 that includes a rotatable deformable V-shaped rear triangle, where the rear triangle is initially deformed when the suspension (a shock absorber) is in an initial, non-compressed state, which may compromise the durability of the rear triangle.

It is an objective of this invention to design a bicycle frame that is an alternative to existing bicycle frames with at least four points of rotation, and that presents a good stiffness to weight ratio as well as a rear suspension that operates in an optimal manner.

### Brief description of the invention

It is an object of this invention to provide a bicycle frame with a rear suspension system that comprises at least one rear triangle.

The rear triangle of the frame according to the invention is such that, in the complete transition of the suspension system, it is capable of adopting at least the following positions: an initial position with an absence of deformation, a first intermediate position in which the rear triangle presents a maximum deformation in a first direction, a second intermediate position with an absence of deformation, and a final position in which the rear triangle presents a maximum deformation in a second direction.

The deformation presented by the rear triangle according to the invention is such that the difference between the maximum deformation in a first direction and the maximum deformation in a second direction is less than 10%.

The characteristic of the rear triangle being deformable allows the pivot point usually located in the area of the rear wheel axle of the bicycle to be removed, thereby reducing the weight of the frame.

Additionally, having a rear triangle capable of being deformed in two different directions, in such a way that the maximum deformation in both directions differs by only 10%, and in such a way that in two points of the stroke or complete transition of the suspension the rear triangle is not deformed, ensures that the rear triangle is at all times only slightly deformed or not deformed at all. This means that the structure of the frame suffers only minimal duress and that the stiffness is affected only to a minimal extent.

In a preferred embodiment, the rear triangle comprises a strut that is such that the deformation of the rear triangle is distributed along the entire length of the strut. The fact that the deformation is not all concentrated in a small area but on a relatively long component of the rear triangle contributes to the reduction of the deformation.

This reduction of the maximum deformation without the frame losing stiffness is the main advantage of the invention.

### Brief description of the drawings

Details of the invention can be seen in the accompanying drawings, which do not intend to limit the scope of the invention:
- Figure 1 shows a front view of an embodiment of the bicycle frame according to the invention.
- Figure 2 shows a schematic view of a detailed enlargement of the stroke of the rear triangle of the frame shown in Figure 1.

### Detailed description of the invention

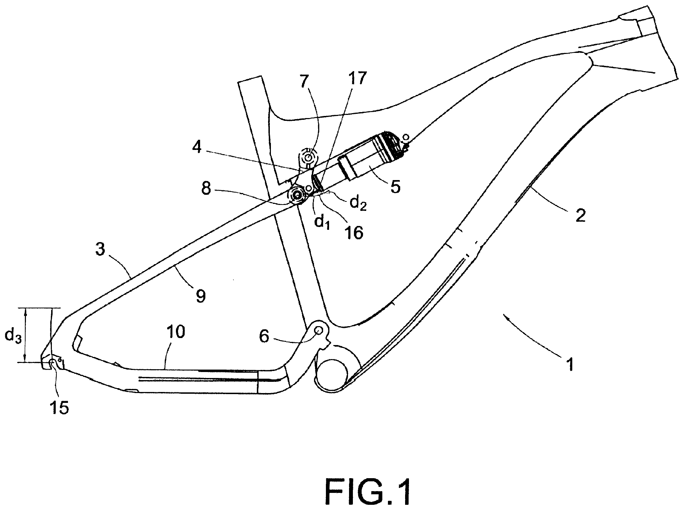

Figure 1 shows an embodiment of the bicycle frame according to the invention. As can be seen, the frame (1) comprises a front triangle (2), at least one rear triangle (3), a link (4) and a shock absorber (5). Usually, the bicycle frame will be provided with two rear triangles (3), one on each side of the rear wheel of the bicycle. The rear triangle (3) also comprises a strut (9) and a base (10). All the aforementioned elements are already known in other suspension frames.

In the embodiment shown in Figure 1, the front triangle (2) is connected in an articulated manner to the base (10) of the rear triangle (3) at a first pivot point (6). The link (4) is connected in an articulated manner to the front triangle (2) at a second pivot point (7) and in turn is connected in an articulated manner to the rear triangle (3) at a third pivot point (8). The strut (9) and the base (10) are connected to each other in a non-articulated manner in the area corresponding to the rear wheel axle (15) of the bicycle; in other words, there is no pivot point between the strut (9) and the base (10). The shock absorber (5) is connected in an articulated manner to the link (4) and to the front triangle (2).

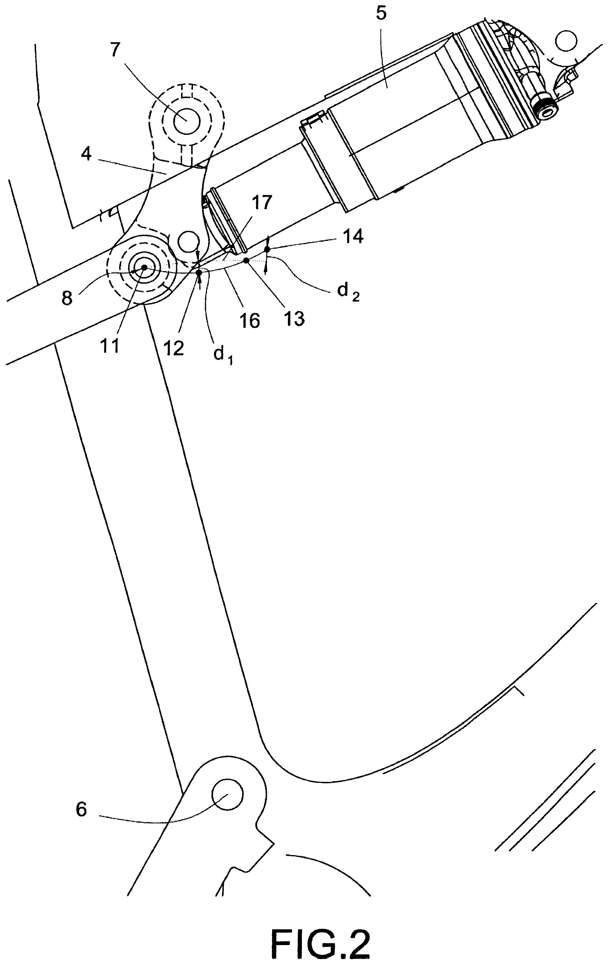

The suspension system is such that the rear triangle (3) may suffer a transition or change of position between a situation of non-compression (Figure 1) and a situation of maximum compression. During the complete transition of the suspension system, the base (10) pivots on the first pivot point (6) and the link (4) pivots in relation to the second pivot point (7). In its angular stroke, which is limited by the shock absorber (5), the link (4) pulls the strut (9) with the result that the third pivot point (8) describes an actual trajectory (16) that may be seen in detail in Figure 2. In contrast, in the event that the rear triangle (3) were not deformable, the third pivot point (8) would follow a theoretical trajectory (17), which is shown in Figures 1 and 2 with a dotted line.

The bicycle frame (1) according to the invention is characterised in that, in the complete transition of the suspension system, the rear triangle (3) is capable of adopting at least the following positions:
- an initial position, in which the third pivot point (8) is located at an initial point (11), said initial point (11) being a point of intersection between the actual trajectory (16) and the theoretical trajectory (17), thus meaning that the rear triangle (3) does not present any deformation,
- a first intermediate position at which the third pivot point (8) is located at a first intermediate point (12) and the rear triangle (3) presents a maximum deformation in a first direction (d₁),
- a second intermediate position, at which the third pivot point (8) is located at a second intermediate point (13) at which a point of intersection between the trajectories (16, 17) occurs; in other words, the rear triangle (3) again does not present any deformation, and
- a final position in which the third pivot point (8) is located at a final point (14), and at which the rear triangle (3) presents a maximum deformation in a second direction (d₂).

In positions corresponding to the portion of the actual trajectory (16) between the initial point (11) and the first intermediate point (12), the rear triangle (3) is progressively deformed until it reaches its maximum deformation. From the first intermediate point (12), the rear triangle (3) begins to relax until reaching the position associate to the second intermediate point (13). In the final portion of the actual trajectory (16), between the second intermediate point (13) and the final point (14), the rear triangle (3) deforms in an opposite direction.

The frame (1) according to the invention is such that the difference between the maximum deformation in a first direction (d₁) and the maximum deformation in a second direction (d₂) is smaller than 10%. The fact that the deformation suffered by the rear triangle (3) in both directions (d₁, d₂) is very similar means that the trajectories (16, 17) are very close to each other. Thanks to this proximity between the trajectories (16, 17) the force required for the suspension to advance in reaching the final position is reduced.

Preferably, the deformation of the rear triangle (3) is distributed along the entire length of the strut (9). The strut (9) according to the invention is formed by carbon fibre, though any other material whose properties allow for deformation may be used. The distribution of the amount of layers of fibre all the way along the carbon laminate of the strut (9) is constant in order to ensure that the deformation is not concentrated in a specific area, as occurs in other bending-based designs.

In addition, as shown in Figure 1, in the complete transition of the suspension system the rear wheel axle (15) of the bicycle is moved by a distance (d₃). In a preferred embodiment of the frame (1), the maximum deformation (d₁) is smaller than 10% of said distance (d₃). This value provides for an optimal stiffness, as it allows greater movement of the wheel with less deformation.

Preferably, the intermediate second intermediate point (13) between the two trajectories (17, 18) corresponds to a range of compression of the shock absorber (5) of between 80% and 90% in relation to its maximum extension in the initial position (11). The aforementioned range allows the second intermediate point (13) to be located in a position close to the final point (14), thereby optimising the approximation of the trajectories (17,18).

Preferably, the strut (9) of the frame (1) according to the invention is not provided with any type of support or auxiliary cable. Specifically, the support for the brake calliper, which must be fitted onto a structurally robust member, may be located in the base (10) of the rear triangle (3) instead. As a result, the strut (9) is free from auxiliary members that may interfere with its deformation.

## Claims

1. Bicycle frame (1) comprising a front triangle (2) and at least one rear triangle (3), wherein said at least one rear triangle (3) is elastically deformable and comprises a strut (9) and a base (10) connected to each other in a non-articulated manner in the area corresponding to the rear wheel axle (15) of the bicycle, wherein said base (10) is connected to said front triangle (2) at a first pivot point (6), wherein a link (4) is pivotably connected to said front triangle (2) at a second pivot point (7) and to said strut (9) at a third pivot point (8), and wherein a shock absorber (5) is pivotably connected to the front triangle (2) and to the link (4), said movable rear triangle (3), link (4) and shock absorber (5) forming a rear suspension system that is movable along a range of positions from an initial position in which said shock absorber (5) is not compressed to a final position in which said shock absorber (5) is most compressed, **characterised in that** the third pivot point (8) accordingly follows an actual trajectory (16) around said second pivot point (7) and the rear triangle (3) is configured to adopt at least the following positions:
- an initial position, in which the third pivot point (8) is at an initial point (11) that is an intersection point between said actual trajectory (16) and a theoretical trajectory (17), wherein said theoretical trajectory (17) is circularly arranged around said first pivot point (6) and corresponds to said rear triangle (3) moving with an absence of deformation, said rear triangle (3) thus presenting no deformation when said third pivot point (8) is in said initial position,
- a first intermediate position in which the third pivot point (8) is at a first intermediate point (12) and the rear triangle (3) presents a maximum deformation in a first direction (d₁),
- a second intermediate position in which the third pivot point (8) is at a second intermediate point (13) that is another intersection point between said actual
trajectory (16) and said theoretical trajectory (17), said rear triangle (3) again presenting no deformation when said third pivot point (8) is in said second intermediate position,
- a final position in which the third pivot point (8) is at a final point (14), and in which said rear triangle (3) presents a maximum deformation in a second direction (d₂) different to said first direction, where
the difference between the maximum deformation in a first direction (d₁) and the maximum deformation in a second direction (d₂) is less than 10%.

2. Bicycle frame (1) according to claim 1, **characterised in that** the strut (9) is deformable along its entire length so that the deformation of the rear triangle (3) is distributed along the entire length of the strut (9).

3. Bicycle frame (1) according to claim 1, **characterised in that**, in the complete transition of the suspension system between a situation of non-compression and a situation of maximum compression, the rear wheel travels a distance (d₃), the maximum deformation in a first direction (d₁) being smaller than 10% of the distance (d₃) travelled by the rear wheel.

4. Bicycle frame (1) according to claim 1, **characterised in that**, when said third pivot point (3) is at said intermediate second position, the shock absorber (5) is compressed to between 80% and 90% of its initial length.

5. Bicycle frame (1) according to claim 2, **characterised in that** the strut (9) is free of supports and cables.

6. Bicycle, comprising a frame (1) according to claim 1.

## Patentansprüche

1. Fahrradrahmen (1), der ein vorderes Dreieck (2) und mindestens ein hinteres Dreieck (3) umfasst, wobei das besagte mindestens eine hintere Dreieck (3) elastisch deformierbar ist und eine Strebe (9) und eine Basis (10) umfasst, die miteinander in gelenkfreier Weise in dem Bereich verbunden sind, der der Hinterradachse (15) des Fahrrads entspricht, wobei besagte Basis (10) mit besagtem vorderen Dreieck (2) an einem ersten Drehpunkt (6) verbunden ist, und ein Bindeglied (4) drehbar an einem zweiten Drehpunkt (7) mit besagtem vorderen Dreieck (2) und mit besagter Strebe (9) an einem dritten Drehpunkt (8) verbunden ist, wobei ein Stoßdämpfer (5) drehbar mit dem vorderen Dreieck (2) und mit dem Bindeglied verbunden ist (4), wobei das besagte bewegliche hintere Dreieck (3), das Bindeglied (4) und der Stoßdämpfer (5) ein hinteres Federungssystem bilden, das entlang einer Reihe von Positionen bewegt werden kann, von einer Anfangsposition, bei der besagter Stoßdämpfer (5) nicht komprimiert ist, zu einer Schlussposition, bei der besagter Stoßdämpfer (5) am stärksten komprimiert ist, **dadurch gekennzeichnet, dass** der dritte Drehpunkt (8) entsprechend einer tatsächlichen Bahnkurve (16) rund um besagten zweiten Drehpunkt (7) folgt, und das hintere Dreieck (3) so angeordnet ist, dass mindestens die folgenden Positionen angenommen werden können:
- eine Anfangsposition, bei der der dritte Drehpunkt (8) sich an einem Anfangspunkt (11) befindet, der einen Schnittpunkt zwischen besagter tatsächlicher Bahnkurve (16) und einer theoretischen Bahnkurve (17) bildet, wobei besagte theoretische Bahnkurve (17) kreisförmig rund um besagten ersten Drehpunkt (6) angeordnet ist und einer deformationsfreien Bewegung des besagtem hinteren Dreiecks (3) entspricht, so dass besagtes hinteres Dreieck (3) keine Deformation aufweist, wenn besagter dritter Drehpunkt (8) sich in besagter Anfangsposition befindet,
- eine erste Zwischenposition, bei der der dritte Drehpunkt (8) sich an einem ersten Zwischenpunkt (12) befindet und das hintere Dreieck (3) eine maximale Deformation in eine erste Richtung (d1) aufweist,
- eine zweite Zwischenposition, bei der sich der dritte Drehpunkt (8) an einem zweiten Zwischenpunkt (13) befindet, der einen weiteren Schnittpunkt zwischen besagter tatsächlicher Bahnkurve (16) und besagter theoretischer Bahnkurve (17) darstellt, wobei besagtes hinteres Dreieck (3) erneut keine Deformation aufweist, wenn besagter dritter Drehpunkt (8) sich in besagter zweiter Zwischenposition befindet,
- eine Schlussposition, bei der sich der dritte Drehpunkt (8) an einem Schlusspunkt (14) befindet, und bei der besagtes hinteres Dreieck (3) eine maximale Deformation in eine zweite Richtung aufweist (d2), die sich von besagter erster Richtung unterscheidet, wobei die Differenz zwischen der maximalen Deformation in eine erste Richtung (d1) und die maximale Deformation in eine zweite Richtung (d2) weniger als 10% beträgt.

2. Fahrradrahmen (1) gemäß Anspruch 1, **dadurch gekennzeichnet, dass** die Strebe (9) in ihrer gesamten Länge deformierbar ist, so dass die Deformation des hinteren Dreiecks (3) auf die gesamte Länge der Strebe (9) verteilt ist.

3. Fahrradrahmen (1) gemäß Anspruch 1, **dadurch gekennzeichnet, dass** beim vollständigen Übergang des Federungssystems zwischen einem nicht komprimierten Zustand und einem maximal komprimierten Zustand das Hinterrad einen Abstand (d3) zurücklegt, wobei die maximale Deformation in eine erste Richtung (d1) weniger als 10% des Abstands (d3) beträgt, das das Hinterrad zurücklegt.

4. Fahrradrahmen (1) gemäß Anspruch 1, **dadurch gekennzeichnet, dass** wenn sich besagter dritter Drehpunkt (3) in besagter zweiter Zwischenposition befindet, der Stoßdämpfer (5) auf 80% bis 90% seiner anfanglichen Länge komprimiert wird.

5. Fahrradrahmen (1) gemäß Anspruch 2, **dadurch gekennzeichnet, dass** die Strebe (9) frei von Stützen und Kabeln ist.

6. Fahrrad, das einen Rahmen (1) gemäß Anspruch 1 umfasst.

## Revendications

1. Cadre de vélo (1) comprenant un triangle avant (2) et au moins un triangle arrière (3) dans lequel ledit triangle arrière (3), est déformable élastiquement et comprend un hauban (9) et une base (10) reliés l'un à l'autre d'une manière non articulée dans la zone correspondant à l'essieu de roue arrière (15) du vélo, où ladite base (10) est connectée à ce triangle avant (2) à un premier point de pivot (6) où un lien (4) est connecté par pivot audit triangle avant (2) à un second point de pivot (7) et connectée à audit hauban (9) à un troisième point de pivot (8), et où un amortisseur de choc (5) est connecté par pivot au triangle avant (2) et au lien (4), ledit triangle arrière mobile (3), lien (4) et l'amortisseur de choc (5) formant un système de suspension arrière qui est déplaçable le long d'une gamme de positions à partir d'une position initiale dans laquelle ledit amortisseur de choc (5) n'est pas comprimé à une position finale dans laquelle ledit amortisseur de choc (5) est fortement comprimé, **caractérisé par le fait que** le troisième point de pivot (8) suit une trajectoire actuelle (16) autour dudit second point de pivot (7) et le triangle arrière (3) est configuré pour adopter au moins les positions suivantes:
- une position initiale dans laquelle le troisième point de pivot (8) est à un point initial (11) qui est une intersection entre ladite trajectoire actuelle (16) et une trajectoire théorique (17), où ladite trajectoire théorique (17) est disposée de manière circulaire autour dudit premier point de pivot (6) et correspond au mouvement dudit triangle arrière (3) avec absence de déformation, par conséquent ledit troisième point de pivot (8) ne présentant pas de déformation lorsque est dans ladite position initiale,
- une première position intermédiaire dans laquelle le troisième point de pivot (8) est à un premier point intermédiaire (12) et le triangle arrière (3) présente une déformation maximale dans une première direction (d1),
- une seconde position intermédiaire dans laquelle le troisième point de pivot (8) est à un second point intermédiaire (13) qui est un autre point d'intersection entre ladite trajectoire actuelle (16) et ladite trajectoire théorique (17), ledit triangle arrière (3) présentant à nouveau aucune déformation lorsque ledit troisième point de pivot (8) est dans ladite deuxième position intermédiaire,
- une position finale dans laquelle le troisième point de pivot (8) est à un point final (14) et dans lequel ledit triangle arrière (3) présente une déformation maximale dans une deuxième direction (d2) différente de ladite première direction, où la différence entre la déformation maximale dans une première direction (d1) et la déformation maximale dans une deuxième direction (d2) est inférieure à 10%.

2. Cadre de vélo (1) selon la revendication 1, **caractérisé par le fait que** le hauban (9) est déformable sur toute sa longueur, de telle sorte que la déformation du triangle arrière (3) est répartie sur toute la longueur du hauban (9).

3. Cadre de vélo (1) selon la revendication 1, **caractérisé par le fait que** dans la transition complète du système de suspension entre une situation de non-compression et une situation de compression maximale, la roue arrière se déplace sur une distance (d3), la déformation maximale dans une première direction (d1) étant inférieure à 10% de la distance (d3) parcourue par la roue arrière.

4. Cadre de vélo (1) selon la revendication 1, **caractérisé par le fait que** lorsque ledit troisième point de pivot (3) est à ladite deuxième position intermédiaire, l'amortisseur de choc (5) est comprimé à environ 80% et 90% de sa longueur initiale.

5. Cadre de vélo (1) selon la revendication 2, **caractérisé par le fait que** le hauban (9) est libéré des supports et des câbles.

6. Vélo, comprenant un cadre (1) selon la revendication 1.
